# EUROPÄISCHE PATENTSCHRIFT

(11) **EP 4 056 773 B1**
(45) Veröffentlichungstag und Bekanntmachung des Hinweises auf die Patenterteilung: **11.12.2024**
(21) Anmeldenummer: 22161112.2
(22) Anmeldetag: 09.03.2022
(51) Int. Cl.: E03C 1/04, E03C 1/05, F16K 37/00

(54) **HYDRAULIKEINRICHTUNG FÜR EINE SANITÄREINRICHTUNG**
HYDRAULIC DEVICE FOR A SANITARY DEVICE
DISPOSITIF HYDRAULIQUE POUR UN DISPOSITIF SANITAIRE

(30) Priorität: 12.03.2021 DE 102021106070
(43) Veröffentlichungstag der Anmeldung: 14.09.2022
(73) Patentinhaber: Grohe AG, 58675 Hemer (DE)
(72) Erfinder: MAINKA, David, 58640 Iserlohn (DE); THOMAS, Michael, 44805 Bochum (DE)

(56) Entgegenhaltungen:
- US-B2- 9 085 880
- US-B2- 9 632 514

## Beschreibung

Die vorliegende Erfindung betrifft eine Hydraulikeinrichtung für eine Sanitäreinrichtung, die insbesondere zur Körperhygiene und/oder therapeutischen Anwendungen verwendbar ist.

Hydraulikeinrichtungen können beispielsweise nach Art von Unterputzarmaturen ausgebildet sein, die in eine Gebäudewand einbaubar sind. Weiterhin können Hydraulikvorrichtungen ein Mischventil zum Mischen von Kaltwasser und Warmwasser zu Mischwasser mit einer gewünschten Mischwassertemperatur aufweisen. Das Mischwasser ist anschließend über eine Mehrzahl von Flüssigkeitsabläufen der Hydraulikvorrichtung einer Mehrzahl von Flüssigkeitsauslässen der Sanitäreinrichtung zuführbar. Hierzu können die Flüssigkeitsabläufe der Hydraulikvorrichtung beispielsweise über Rohrleitungen oder Schlauchleitungen mit den Flüssigkeitsauslässen verbindbar sein. Die Abgabe des Mischwassers ist über Ventile der Hydraulikeinrichtung steuerbar, die den einzelnen Flüssigkeitsabläufen zugeordnet sind. Die Flüssigkeitsauslässe können beispielsweise nach Art von Brausen, Düsen, Strahlbildnern, Öffnungen und/oder Wannenausläufen ausgebildet sein. Derartige Hydraulikeinrichtungen sind beispielsweise aus US 9,085,880 B2 sowie aus US 9,632,514 B2 bekannt. Je nach Anzahl von Flüssigkeitsauslässen der Sanitäreinrichtung wird eine Hydraulikvorrichtung mit einer entsprechenden Anzahl von Flüssigkeitsabläufen benötigt. Dies führt zu einer hohen Variantenvielfalt der Hydraulikeinrichtungen und damit zu hohen Kosten.

Aufgabe der Erfindung ist es daher, die mit Bezug auf den Stand der Technik geschilderten Probleme zumindest teilweise zu lösen und insbesondere eine Hydraulikeinrichtung anzugeben, die an die Anzahl von Flüssigkeitsauslässen einer Sanitäreinrichtung anpassbar ist.

Diese Aufgabe wird gelöst mit einer Hydraulikeinrichtung gemäß den Merkmalen des unabhängigen Patentanspruchs. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale wie in den Ansprüchen definiert miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Hydraulikeinrichtung für eine Sanitäreinrichtung bei, die zumindest Folgendes aufweist:
- zumindest einen Flüssigkeitszulauf;
- zumindest einen Flüssigkeitsablauf;
- einen Träger mit zumindest einer Aufnahme für ein Ventil; und
- zumindest einen Sensor zum Erkennen des Ventils.

Bei der Sanitäreinrichtung kann es sich beispielsweise um eine Dusche oder Badewanne handeln, die insbesondere zur Körperhygiene und/oder für therapeutische Anwendungen verwendbar sind. Hierzu kann die Sanitäreinrichtung beispielsweise in einem Badezimmer angeordnet sein. Weiterhin kann die Sanitäreinrichtung auch in Anlagen mit Badeeinrichtung, wie z. B. Saunen, Whirlpools, Schwimmbädern usw. verwendet werden. Die Sanitäreinrichtung kann zumindest einen Flüssigkeitsauslass, beispielsweise nach Art einer Brause, Kopfbrause, Handbrause, Seitenbrause, Düse, Strahlbildner, Mousseur und/oder Wannenauslauf, aufweisen. Insbesondere kann die Sanitäreinrichtung eine Mehrzahl von Flüssigkeitsauslässen, beispielsweise mindestens drei Flüssigkeitsauslässe, aufweisen.

Die Hydraulikeinrichtung kann beispielsweise nach Art einer Sanitärarmatur ausgebildet sein. Insbesondere kann die Hydraulikeinrichtung nach Art einer Unterputzarmatur ausgebildet sein, die insbesondere in eine Gebäudewand bzw. in eine Öffnung der Gebäudewand einbaubar ist. Hierzu kann die Hydraulikeinrichtung beispielsweise ein Gehäuse aufweisen, das zumindest teilweise aus Kunststoff und/oder Metall bestehen kann. Die Hydraulikeinrichtung weist zumindest einen Flüssigkeitszulauf auf. Insbesondere kann die Hydraulikeinrichtung einen ersten Flüssigkeitszulauf für Kaltwasser und einen zweiten Flüssigkeitszulauf für Warmwasser aufweisen. Über den zumindest einen Flüssigkeitszulauf ist die Hydraulikeinrichtung insbesondere mit einer Flüssigkeitsquelle, beispielsweise nach Art eines öffentlichen Wasserversorgungsnetz und/oder einem Boiler, verbindbar. Hierzu kann an den zumindest einen Flüssigkeitszulauf eine Zuführleitung, beispielsweise nach Art einer Rohrleitung oder Schlauchleitung, anschließbar sein. Weiterhin kann die Hydraulikeinrichtung zumindest einen Flüssigkeitsablauf aufweisen. Vorzugsweise weist die Hydraulikeinrichtung eine Mehrzahl von Flüssigkeitsabläufen, beispielsweise mindestens drei Flüssigkeitsabläufe, auf. Der zumindest eine Flüssigkeitsablauf ist insbesondere mit dem zumindest einen Flüssigkeitsauslass der Sanitäreinrichtung verbindbar. Hierzu kann an den zumindest einen Flüssigkeitsablauf eine Flüssigkeitsleitung, beispielsweise nach Art einer Rohrleitung oder Schlauchleitung, anschließbar sein. Insbesondere kann jeder Flüssigkeitsablauf der Hydraulikeinrichtung mit einem oder mehreren Flüssigkeitsauslässen der Sanitäreinrichtung verbindbar sein. Der zumindest eine Flüssigkeitsablauf kann über zumindest einen Flüssigkeitskanal mit dem zumindest einen Flüssigkeitszulauf verbunden sein.

Zudem weist die Hydraulikeinrichtung einen Träger mit zumindest einer Aufnahme für ein Ventil auf. Der Träger dient insbesondere der Aufnahme von Funktionskomponenten der Hydraulikeinrichtung. Weiterhin kann der Träger zumindest teilweise aus Kunststoff oder Metall, wie zum Beispiel Messing, bestehen. Zudem kann der Träger nach Art eines Grundkörpers ausgebildet sein. Der zumindest eine Flüssigkeitszulauf und/oder der zumindest eine Flüssigkeitsablauf können als Öffnung in dem Träger ausgebildet sein. Weiterhin kann der zumindest eine Flüssigkeitskanal in dem Träger, beispielsweise nach Art einer Bohrung, ausgebildet sein. Zudem kann sich der zumindest eine Flüssigkeitskanal durch die zumindest eine Aufnahme für das Ventil erstrecken. Die zumindest eine Aufnahme kann als Öffnung in dem Träger ausgebildet sein. Die Hydraulikeinrichtung kann insbesondere je Flüssigkeitsablauf eine Aufnahme für das Ventil aufweisen. Hierdurch kann jedem Flüssigkeitsablauf insbesondere eine Aufnahme bzw. ein Ventil zugeordnet sein. Durch das Ventil ist insbesondere eine Flüssigkeitsabgabe über den zumindest einen Flüssigkeitsablauf steuerbar. Insbesondere ist die Flüssigkeitsabgabe über jeden Flüssigkeitsablauf durch ein separates Ventil steuerbar. Das Ventil ist in die zumindest eine Aufnahme insbesondere derart anordenbar, dass aus der Aufnahme keine Flüssigkeit, insbesondere Wasser, in eine Umgebung der Hydraulikeinrichtung austreten kann. Hierzu kann die zumindest eine Aufnahme und/oder das Ventil zumindest eine Dichtung aufweisen. Das zumindest eine Ventil ist insbesondere elektrisch betätigbar. Dies kann insbesondere bedeuten, dass das Ventil elektrisch schließbar und öffnenbar ist. Insbesondere kann das Ventil nach Art eines elektromechanischen Ventils ausgebildet sein. In einer Grundausführung der Hydraulikeinrichtung kann beispielsweise nicht jede Aufnahme der Hydraulikeinrichtung ein Ventil aufweisen. In diesem Fall ist nur derjenige Flüssigkeitsablauf bzw. sind nur diejenigen Flüssigkeitsabläufe der Hydraulikeinrichtung nutzbar, dem oder denen ein Ventil zugeordnet ist bzw. in deren Flüssigkeitskanal ein Ventil angeordnet ist. Beispielsweise kann vorgesehen sein, dass in der Grundausführung der Hydraulikeinrichtung nur eine Aufnahme der Hydraulikeinrichtung ein Ventil aufweist, wobei in den übrigen Aufnahmen der Hydraulikeinrichtung kein Ventil angeordnet ist. Somit ist nur ein einziger Flüssigkeitsablauf der Hydraulikeinrichtung nutzbar. Diejenigen Aufnahmen, in denen kein Ventil angeordnet ist, können geschlossen sein, sodass über den jeweils zugeordneten Flüssigkeitsablauf keine Flüssigkeit abfließen kann. Hierzu kann die zumindest eine Aufnahme beispielsweise selbstschließend ausgebildet sein. Durch die Aufnahmen kann die Hydraulikeinrichtung je nach Anzahl benötigter Flüssigkeitsabläufe mit Ventilen bzw. einer entsprechenden Anzahl Ventilen nachgerüstet bzw. bestückt werden.

Darüber hinaus weist die Hydraulikeinrichtung zumindest einen Sensor zum Erkennen des Ventils auf. Insbesondere kann die Hydraulikeinrichtung je Aufnahme einen Sensor aufweisen.

Durch den Sensor ist erfindungsgemäß detektierbar, ob sich in einer Aufnahme der Hydraulikeinrichtung ein Ventil befindet oder nicht bzw. in welcher Aufnahme der Hydraulikeinrichtung ein Ventil angeordnet ist oder nicht. Durch den zumindest einen Sensor kann eine Elektronik der Hydraulikeinrichtung insbesondere erkennen, welcher Flüssigkeitsablauf nutzbar ist und welcher nicht. Der Sensor zum Erkennen des Ventils kann erfindungsgemäß die Anwesenheit eines Ventils in der Hydraulikeinrichtung und insbesondere folgendes ermitteln: Lage eines Ventils in der Hydraulikeinrichtung, Einstellung bzw. Ausrichtung eines Ventils in der Hydraulikeinrichtung, und/oder Funktionalität eines Ventils in der Hydraulikeinrichtung.

Die Hydraulikeinrichtung kann ein Mischventil aufweisen. Durch das Mischventil ist insbesondere Kaltwasser mit einer Kaltwassertemperatur und Warmwasser mit einer Warmwassertemperatur zu Mischwasser mit einer gewünschten Mischwassertemperatur mischbar. Das Mischventil ist insbesondere elektrisch betätigbar. Hierzu kann das Mischventil beispielsweise nach Art eines elektromechanischen Mischventils bzw. einer elektromechanischen Mischeinheit ausgebildet sein. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Das Ventil kann in die zumindest eine Aufnahme gesteckt oder geschraubt werden. Hierzu kann das Ventil und/oder die zumindest eine Aufnahme ein Gewinde aufweisen. Zudem kann das Ventil in der zumindest einen Aufnahme beispielsweise durch eine Rastverbindung befestigbar sein. Hierdurch können Ventile mit geringem Aufwand nachgerüstet werden.

In der zumindest einen Aufnahme kann ein Schließelement angeordnet sein. Insbesondere kann in denjenigen Aufnahmen ein Schließelement angeordnet sein, in denen kein Ventil angeordnet ist. Weiterhin kann in denjenigen Aufnahmen ein Schließelement angeordnet sein, die einem nicht benötigten Flüssigkeitsablauf zugeordnet sind. Das Schließelement kann beispielsweise nach Art eines Stopfens oder Blindstopfens ausgebildet sein. Durch das Schließelement ist die zumindest eine Aufnahme insbesondere derart schließbar, dass der Flüssigkeitskanal, der sich durch die jeweilige Aufnahme erstreckt, geschlossen ist. Somit kann der der Aufnahme zugeordnete Flüssigkeitsablauf dauerhaft geschlossen bzw. außer Betrieb gesetzt werden.

Durch den zumindest einen Sensor ist ein elektrischer Widerstand des Ventils messbar. Hierzu kann der Sensor nach Art eines Widerstandssensors ausgebildet sein.

Der zumindest eine Sensor kann mit einer Steuerung verbunden sein. Insbesondere kann der zumindest eine Sensor datenleitend mit der Steuerung verbunden sein. Die Steuerung kann nach Art eines Mikrocontrollers ausgebildet sein. Weiterhin kann die Steuerung dazu ausgebildet sein und/oder dazu eingerichtet sein mithilfe des zumindest einen Sensors zu erkennen, in welcher Aufnahme sich ein Ventil befindet und in welcher Aufnahme nicht. Dies kann insbesondere mittels Widerstandsmessung erfolgen. Zudem kann die Steuerung zum Steuern des Mischventils, des Ventils und/oder der Ventile dienen.

Die Hydraulikeinrichtung kann eine Bedienvorrichtung aufweisen. Durch die Bedienvorrichtung ist beispielsweise das Ventil bzw. sind die Ventile durch den Benutzer der Hydraulikeinrichtung betätigbar, insbesondere öffnenbar und/oder schließbar. Zudem kann vorgesehen sein, dass durch die Bedienvorrichtung das Mischventil betätigbar ist. Dies kann insbesondere bedeuten, dass durch die Bedienvorrichtung die Mischwassertemperatur des Mischwassers einstellbar ist. Die Bedienvorrichtung kann datenleitend, beispielsweise per Funk oder einer Kabelverbindung, mit der Steuerung verbunden sein. Zudem kann die Bedienvorrichtung an einer Gebäudewand und/oder einem Duschraum der Sanitäreinrichtung angeordnet sein.

Die Bedienvorrichtung kann ein Display aufweisen. Auf dem Display kann insbesondere ein Betriebszustand der Hydraulikeinrichtung, des Ventils und/oder der Ventile anzeigbar sein. Zudem kann vorgesehen sein, dass auf dem Display die Mischwassertemperatur anzeigbar ist.

Das Display kann als Touchscreen ausgebildet sein, auf dem zumindest eine Bedienfläche für das Ventil ausgebildet ist, wenn durch den zumindest einen Sensor das Ventil in der zumindest einen Aufnahme erkannt wird. Über die zumindest eine Bedienfläche kann der Benutzer der Hydraulikeinrichtung das Ventil bzw. die Ventile schließen und/oder öffnen.

Die zumindest eine Bedienfläche kann nicht ausgebildet sein, wenn durch den zumindest einen Sensor in der zumindest einen Aufnahme kein Ventil erkannt wird. Mit anderen Worten können auf dem Display nur für diejenigen Ventile Bedienflächen angezeigt werden, die tatsächlich in den jeweiligen Aufnahmen angeordnet sind. Somit ist die Bedienvorrichtung, insbesondere automatisch, an die tatsächliche Belegung der Aufnahmen mit Ventilen anpassbar. Weiterhin kann vorgesehen sein, dass an der Bedienvorrichtung jedem Ventil bzw. jedem Flüssigkeitsablauf, dem ein Ventil zugeordnet ist, eine Funktion zuordenbar ist, beispielsweise Flüssigkeitsablauf 1 Kopfbrause, Flüssigkeitsablauf 2 Handbrause und/oder Flüssigkeitsablauf 3 Seitenbrause.

Die Erfindung sowie das technische Umfeld werden nachfolgend anhand der Figuren näher erläutert. Es ist auf hinzuweisen, dass die Figuren eine besonders bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Hydraulikeinrichtung in einer Frontansicht;
- Fig. 2:: eine Sanitäreinrichtung mit der Hydraulikeinrichtung in einer Seitenansicht; und
- Fig. 3:: eine Bedienvorrichtung der Sanitäreinrichtung in einer Frontansicht.

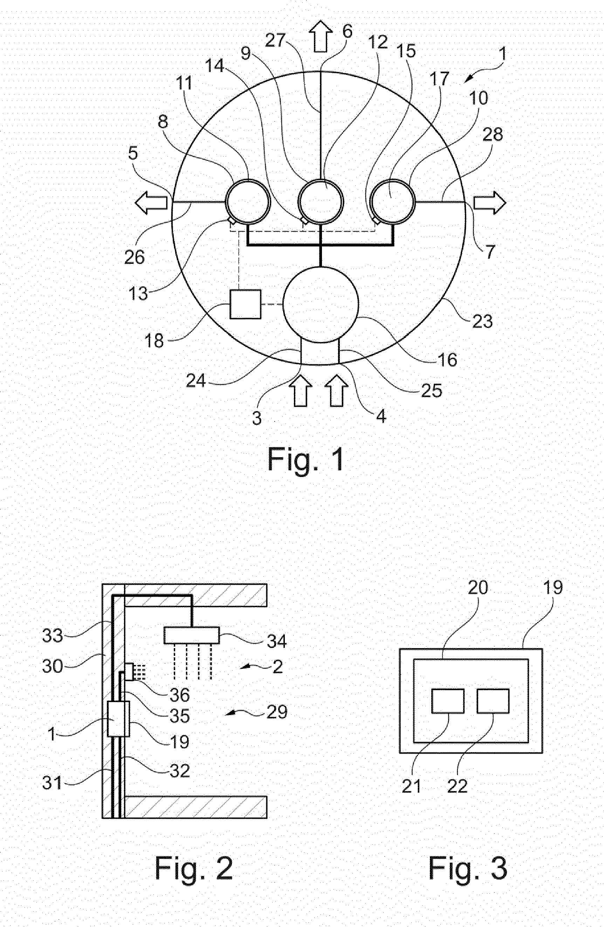

Die Fig. 1 zeigt eine Hydraulikeinrichtung 1 in einer Frontansicht. Die Hydraulikeinrichtung 1 umfasst einen Träger 23 mit einem ersten Flüssigkeitszulauf 3 für Kaltwasser und einem zweiten Flüssigkeitszulauf 4 für Warmwasser. An dem Träger 23 ist ein Mischventil 16 angeordnet, dem das Kaltwasser über eine Kaltwasserleitung 24 und das Warmwasser über eine Warmwasserleitung 25 zuführbar sind. Das Kaltwasser und Warmwasser sind durch das Mischventil 16 zu Mischwasser mit einer gewünschten Mischwassertemperatur mischbar. Das Mischventil 16 ist über einen ersten Mischwasserkanal 26 mit einem ersten Flüssigkeitsablauf 5, über einen zweiten Mischwasserkanal 27 mit einem zweiten Flüssigkeitsablauf 6 und über einen dritten Mischwasserkanal 28 mit einem dritten Flüssigkeitsablauf 7 verbunden. In dem ersten Mischwasserkanal 26 ist eine erste Aufnahme 8, in dem zweiten Mischwasserkanal 27 eine zweite Aufnahme 9 und in dem dritten Mischwasserkanal 28 eine dritte Aufnahme 10 ausgebildet. In der ersten Aufnahme 8 ist ein erstes Ventil 11 zum Schließen oder Öffnen des ersten Mischwasserkanals 26 und in der zweiten Aufnahme 9 ein zweites Ventil 12 zum Schließen oder Öffnen des zweiten Mischwasserkanals 27 angeordnet. Das Mischwasser ist daher über den ersten Flüssigkeitsablauf 5 und/oder den zweiten Flüssigkeitsablauf 6 abgebbar. In der dritten Aufnahme 10 ist ein Schließelement 17 angeordnet, das den dritten Mischwasserkanal 28 (dauerhaft) verschließt. Somit ist das Mischwasser nicht über den dritten Flüssigkeitsablauf 7 abgebbar. Je nach Bedarf können in den Aufnahmen 8, 9, 10 entweder ein Ventil 11, 12 oder ein Schließelement 17 angeordnet werden. Die Hydraulikeinrichtung 1 weist an der ersten Aufnahme 8 einen ersten Sensor 13, an der zweiten Aufnahme 9 einen zweiten Sensor 14 und an der dritten Aufnahme 10 einen dritten Sensor 15 auf, die (datenleitend) mit einer Steuerung 18 der Hydraulikeinrichtung 1 verbunden sind. Durch die Sensoren 13, 14, 15 ist detektierbar, in welcher Aufnahme 8, 9, 10 sich ein Ventil 11, 12 befindet.

Die Fig. 2 zeigt eine Sanitäreinrichtung 2 in einer Seitenansicht, die hier nach Art einer Dusche ausgebildet ist. Die Sanitäreinrichtung 2 umfasst einen Duschraum 29, der teilweise von einer Gebäudewand 30 umgeben ist. Die in der Fig. 1 gezeigte Hydraulikeinrichtung 1 ist in der Gebäudewand 30 angeordnet. Der erste Flüssigkeitszulauf 3 der Hydraulikeinrichtung 1 ist mit einer Kaltwasserzuführleitung 31 und der zweite Flüssigkeitszulauf 4 der Hydraulikeinrichtung 1 mit einer Warmwasserzuführleitung 32 verbunden. Weiterhin ist der erste Flüssigkeitsablauf 5 der Hydraulikeinrichtung 1 über eine erste Flüssigkeitsleitung 33 mit einem ersten Flüssigkeitsauslass 34, der hier nach Art einer Kopfbrause ausgebildet ist, und der zweite Flüssigkeitsablauf 6 der Hydraulikeinrichtung 1 über eine zweite Flüssigkeitsleitung 35 mit einem zweiten Flüssigkeitsauslass 36, der hier nach Art einer Seitenbrause ausgebildet ist, verbunden. An der Gebäudewand 30 ist eine Bedienvorrichtung 19 angeordnet, über die das in der Fig. 1 gezeigte erste Ventil 11 der Hydraulikeinrichtung 1 und zweite Ventil 12 der Hydraulikeinrichtung 1 durch einen Benutzer der Sanitäreinrichtung 2 steuerbar sind. Die Abgabe der Flüssigkeit bzw. des Mischwassers kann dadurch wahlweise über den ersten Flüssigkeitsauslass 34 und/oder den zweiten Flüssigkeitsauslass 36 erfolgen.

Die Fig. 3 zeigt die Bedienvorrichtung 19 in einer Frontansicht. Die Bedienvorrichtung 19 umfasst ein Display 20, das nach Art eines Touchscreens ausgebildet ist. Da die in der Fig. 1 gezeigte Steuerung 18 über die Sensoren 13, 14 erkennt, dass sich in den Aufnahmen 8, 9 ein Ventil 11, 12 befindet, zeigt die Steuerung 18 auf dem Display 20 eine erste Bedienfläche 21 zur Betätigung des in der Fig. 1 gezeigten ersten Ventils 11 und eine zweite Bedienfläche 22 zur Betätigung des in der Fig. 1 gezeigten zweiten Ventils 12 an. Durch die Bedienflächen 21, 22 sind die Ventile 11, 12 durch den Benutzer der Sanitäreinrichtung 2 öffnenbar und schließbar.

Durch die vorliegende Erfindung ist eine Hydraulikeinrichtung an die Anzahl von Flüssigkeitsauslässen einer Sanitäreinrichtung flexibel anpassbar.

### Bezugszeichenliste

- 1: Hydraulikeinrichtung
- 2: Sanitäreinrichtung
- 3: erster Flüssigkeitszulauf
- 4: zweiter Flüssigkeitszulauf
- 5: erster Flüssigkeitsablauf
- 6: zweiter Flüssigkeitsablauf
- 7: dritter Flüssigkeitsablauf
- 8: erste Aufnahme
- 9: zweite Aufnahme
- 10: dritte Aufnahme
- 11: erstes Ventil
- 12: zweites Ventil
- 13: erster Sensor
- 14: zweiter Sensor
- 15: dritter Sensor
- 16: Mischventil
- 17: Schließelement
- 18: Steuerung
- 19: Bedienvorrichtung
- 20: Display
- 21: erste Bedienfläche
- 22: zweite Bedienfläche
- 23: Träger
- 24: Kaltwasserleitung
- 25: Warmwasserleitung
- 26: erster Mischwasserkanal
- 27: zweiter Mischwasserkanal
- 28: dritter Mischwasserkanal
- 29: Duschraum
- 30: Gebäudewand
- 31: Kaltwasserzuführleitung
- 32: Warmwasserzuführleitung
- 33: erste Flüssigkeitsleitung
- 34: erster Flüssigkeitsauslass
- 35: zweite Flüssigkeitsleitung
- 36: zweiter Flüssigkeitsauslass

## Patentansprüche

1. Hydraulikeinrichtung (1) für eine Sanitäreinrichtung (2), zumindest aufweisend:
- zumindest einen Flüssigkeitszulauf (3, 4);
- zumindest einen Flüssigkeitsablauf (5, 6, 7);
- einen Träger (23) mit zumindest einer Aufnahme (8, 9, 10) für ein Ventil (11, 12); und
- zumindest einen Sensor (13, 14, 15) zum Erkennen des Ventils (11, 12), **dadurch gekennzeichnet, dass** durch den zumindest einen Sensor (13, 14, 15) ein elektrischer Widerstand des Ventils (11, 12) messbar ist.

2. Hydraulikeinrichtung (1) nach Patentanspruch 1, aufweisend ein Mischventil (16).

3. Hydraulikeinrichtung (1) nach einem der vorhergehenden Patentansprüche, wobei das Ventil (11, 12) in die zumindest eine Aufnahme (8, 9, 10) gesteckt oder geschraubt ist.

4. Hydraulikeinrichtung (1) nach einem der vorhergehenden Patentansprüche, wobei in der zumindest einen Aufnahme (8, 9, 10) ein Schließelement (17), das nach Art eines Stopfens ausgebildet ist, angeordnet ist.

5. Hydraulikeinrichtung (1) nach einem der vorhergehenden Patentansprüche, wobei der zumindest eine Sensor (13, 14, 15) mit einer Steuerung (18) verbunden ist.

6. Hydraulikeinrichtung (1) nach einem der vorhergehenden Patentansprüche, aufweisend eine Bedienvorrichtung (19).

7. Hydraulikeinrichtung (1) nach Patentanspruch 7, wobei die Bedienvorrichtung (19) ein Display (20) aufweist.

8. Hydraulikeinrichtung (1) nach Patentanspruch 8, wobei das Display (20) als Touchscreen ausgebildet ist, auf dem zumindest eine Bedienfläche (21, 22) für das Ventil (11, 12) ausgebildet ist, wenn durch den zumindest einen Sensor (13, 14, 15) das Ventil (11, 12) in der zumindest einen Aufnahme (8, 9, 10) erkannt wird.

9. Hydraulikeinrichtung (1) nach Patentanspruch 9, wobei die zumindest eine Bedienfläche (21, 22) nicht ausgebildet ist, wenn durch den zumindest einen Sensor (13, 14, 15) in der zumindest einen Aufnahme (8, 9, 10) kein Ventil (11, 12) erkannt wird.

## Claims

1. A hydraulic device (1) for a sanitary device (2), comprising at least:
- at least one liquid inlet (3, 4);
- at least one liquid outlet (5, 6, 7);
- a support (23) having at least one receptacle (8, 9, 10) for a valve (11, 12); and
- at least one sensor (13, 14, 15) for detecting the valve (11, 12), **characterized in that** an electrical resistance of the valve (11, 12) can be measured by the at least one sensor (13, 14, 15).

2. The hydraulic device (1) according to claim 1, comprising a mixing valve (16).

3. The hydraulic device (1) according to any one of the preceding claims, wherein the valve (11, 12) is inserted or screwed into the at least one receptacle (8, 9, 10).

4. The hydraulic device (1) according to any one of the preceding claims, wherein a closing element (17), which is designed in the manner of a plug, is arranged in the at least one receptacle (8, 9, 10).

5. The hydraulic device (1) according to any one of the preceding claims, wherein the at least one sensor (13, 14, 15) is connected to a controller (18).

6. The hydraulic device (1) according to any one of the preceding claims, comprising an operating device (19).

7. The hydraulic device (1) according to claim 7, wherein the operating device (19) comprises a display (20).

8. The hydraulic device (1) according to claim 8, wherein the display (20) is designed as a touch screen on which at least one operating surface (21, 22) for the valve (11, 12) is formed if the valve (11, 12) in the at least one receptacle (8, 9, 10) is detected by the at least one sensor (13, 14, 15).

9. The hydraulic device (1) according to claim 9, wherein the at least one operating surface (21, 22) is not formed if no valve (11, 12) is detected by the at least one sensor (13, 14, 15) in the at least one receptacle (8, 9, 10).

## Revendications

1. Dispositif hydraulique (1) destiné à un dispositif sanitaire (2), comportant au moins:
- au moins une arrivée de liquide (3, 4) ;
- au moins une évacuation de liquide (5, 6, 7) ;
- un support (23) pourvu d'au moins un logement (8, 9, 10) pour une vanne (11, 12) ; et
- au moins un capteur (13, 14, 15) destiné à identifier la vanne (11, 12), **caractérisé en ce qu'**une résistance électrique de la vanne (11, 12) est mesurable par l'au moins un capteur (13, 14, 15) .

2. Dispositif hydraulique (1) selon la revendication 1 du brevet, comportant une vanne mélangeuse (16).

3. Dispositif hydraulique (1) selon l'une quelconque des revendications précédentes du brevet, la vanne (11, 12) étant emboîtée ou vissée dans l'au moins un logement (8, 9, 10).

4. Dispositif hydraulique (1) selon l'une quelconque des revendications précédentes du brevet, dans l'au moins un logement (8, 9, 10) étant placé un élément de fermeture (17), qui est conçu à la manière d'un obturateur.

5. Dispositif hydraulique (1) selon l'une quelconque des revendications précédentes du brevet, l'au moins un capteur (13, 14, 15) étant connecté avec un système de commande (18).

6. Dispositif hydraulique (1) selon l'une quelconque des revendications précédentes du brevet, comportant un dispositif d'actionnement (19).

7. Dispositif hydraulique (1) selon la revendication 7 du brevet, le dispositif d'actionnement (19) comportant un afficheur (20).

8. Dispositif hydraulique (1) selon la revendication 8 du brevet, l'afficheur (20) étant conçu sous la forme d'un écran tactile, sur lequel est constituée au moins une interface de commande (21, 22) pour la vanne (11, 12), si la vanne (11, 12) est identifiée dans l'au moins un logement (8, 9, 10) par l'au moins un capteur (13, 14, 15)

9. Dispositif hydraulique (1) selon la revendication 9 du brevet, l'au moins une interface de commande (21, 22) n'étant pas constituée si aucune vanne (11, 12) n'est identifiée dans l'au moins un logement (8, 9, 10) par l'au moins un capteur (13, 14, 15).
